# EUROPEAN PATENT SPECIFICATION

(11) **EP 1 803 661 B1**
(45) Date of publication and mention of the grant of the patent: **06.03.2013**
(21) Application number: 05793427.5
(22) Date of filing: 17.10.2005
(51) Int. Cl.: B65D 85/10, B65B 19/22

(54) **CIGARETTE PACKAGE AND METHOD OF MANUFACTURING THE SAME**
ZIGARETTENPACKUNG UND HERSTELLUNGSVERFAHREN DAFÜR
EMBALLAGE DE CIGARETTES ET PROCEDE DE FABRICATION DE CELUI-CI

(30) Priority: 19.10.2004 JP 2004304156
(43) Date of publication of application: 04.07.2007
(73) Proprietor: Japan Tobacco, Inc., Tokyo 105-8422 (JP)
(72) Inventor: TANBO, Hitoshi, c/o JAPAN TOBACCO INC., Tokyo 130-8603 (JP); KASHIMURA, Ryuichi, c/o JAPAN TOBACCO INC., Tokyo 130-8603 (JP)
(74) Representative: Isarpatent
(86) International application number: PCT/JP2005/019013
(87) International publication number: WO 2006/043496

(56) References cited:
- WO-A1-99/28212
- WO-A1-02/079051
- WO-A1-02/079052
- WO-A1-03/078274
- WO-A1-03/086903
- DE-U1- 9 318 758
- JP-A- 10 258 881
- JP-A- 63 068 878
- JP-A- 63 248 674
- JP-A- 2001 524 429
- US-A- 5 249 676

## Description

### Technical Field

The present invention relates to a cigarette package having excellent properties for preserving the aroma and flavor of cigarettes or filter cigarettes and to a method of fabricating the same.

### Background Art

As a cigarette package of this type, a hinged-lid package is widely used. The hinged-lid package includes an inner pack obtained by wrapping a bundle of cigarettes or filter cigarettes in aluminum-evaporated paper and an outer box for containing the inner pack. The outer box has a box body and a hinged lid. The outer box is further wrapped in a transparent film, which has a tear tape.

The aluminum-evaporated paper wrapping the cigarette bundle is simply folded around the cigarette bundle, so that there are a lot of gaps between overlapping portions in which the aluminum-evaporated paper overlaps itself. Therefore, aroma components released from the cigarette bundle escape into the box through the gaps.

The outer box itself has a gap between the box body and the hinged lid, too. The film wrapping the outer box is useful for protecting the cigarette bundle from outside moisture, but is not suitable to block the escape of aroma and flavor components.

After the cigarette package is produced, the aroma and flavor components of the cigarette bundle gradually escape outside from the cigarette package. This diminishes the quality of the cigarettes or filter cigarettes, and a best-before date on the cigarette package cannot be set late.

In order to resolve the above problem, cigarette packages disclosed in US Patent No. 6,237,760 and International Publication No. 02/079052 have been known. Each of these well-known cigarette packages includes a sealed-type inner pack contained in an outer box. The inner pack of the package shown in the former publication has an inner frame with the shape of the letter U in section, which holds a cigarette bundle, and an inner wrapper for wrapping the cigarette bundle with the inner frame. The inner wrapper is made of a heat-sealable sheet material.

The inner package of the cigarette package shown in the latter publication has a box-like shape similar to the outer box and includes a heat-sealable inner blank for wrapping a cigarette bundle.

The former inner pack has the inner frame in between the inner wrapper and the cigarette bundle. Therefore, when the inner wrapper is heat-sealed, the inner frame is useful for blocking the heat produced by the heat sealing and transmitted from the inner wrapper to the cigarette bundle. Made of relatively thick paper, however, the inner frame easily absorbs the aroma and flavor components released from the cigarette bundle. This is undesirable for long-term preservation of the aroma and flavor of the cigarette bundle.

The presence of the inner frame requires the step of folding the inner frame as a pre-step of the regular step of forming an inner pack in the process of cigarette package fabrication. In the folding step, the inner frame is folded around the cigarette bundle and is so arranged as to directly contact the cigarette bundle. During the folding process of the inner frame, the cigarettes or filter cigarettes of the cigarette bundle are prone to loosen. In order to fold the inner frame around the cigarette bundle accurately and reliably, a section for carrying out the folding step cannot avoid being complicated in structure. In addition, it is impossible to fold the inner frame at high speed. Accordingly, when the folding section is inserted in the production line of cigarette packages, the production rate of the cigarette packages in the production line is reduced.

In the case of the latter inner pack, the inner blank is folded around the cigarette bundle, so that the folding operation of the inner blank can be carried out in the same manner as the folding operation of the outer box. However, the inner blank directly wraps the cigarette bundle, so that the heat produced by the heat sealing has a bad influence upon the aroma and flavor of the cigarette bundle at the time of heat-sealing the inner blank.

### Disclosure of the Invention

It is an object of the present invention to provide a cigarette package capable of preserving aroma and flavor of a cigarette bundle satisfactorily and extending a best-before date. Another object of the present invention is to provide a fabricating method for fabricating the cigarette package without difficulty.

In order to accomplish the objects, a cigarette package according to the present invention is mode according to the features of claim 1.

Since the cigarette package comprises a sealed-type inner box in between the inner pack and the outer box having ordinary figures, as long as the inner box is not opened, the aroma and flavor components released from the inner pack never escape into a gap between the outer box and the inner box or escape outside the outer box through the gap. Consequently, the cigarette package of the present invention is excellent in retaining quality of the cigarette bundle and extends a best-before date of the cigarette bundle.

Specifically, the inner blank for forming the inner box includes a metal layer serving as the shielding layer and a resin layer serving as a heat-seal layer laminated on each side of the metal layer. In this case, it is preferable that the metal layer and the resin layer be made of aluminum and polypropylene, respectively. Such an inner blank excels not only at shieldability with respect to the aroma and flavor of the cigarette bundle but also at heat-sealability.

The lid is connected to a rear wall of the box body through a self hinge and includes a tongue portion. The tongue portion is superposed upon and detachably heat-sealed to a front face of the box body. In this case, the box body further has a pair of inner top flaps that are provided to the open end of the box body and detachably heat-sealed to the tongue portion. Such inner top flaps enhance sealing performance of the inner box.

It is further preferable that the lid has re-adhesiveness with respect to the box body. By so doing, even if the inner box is once opened, the sealing performance of the inner box can be retained.

The cigarette package of the present invention also comprises an emanating source for emanating aroma to between the inner box and the outer box or have a print area in an outer surface of the inner box.

The present invention also provides a method of fabricating the cigarette package. The fabricating method comprises the steps of wrapping a cigarette bundle in an inner wrapper to form an inner pack; folding around the inner pack an inner blank to form an inner box including a casing body with an open end and a lid for opening/closing the open end of the box, and sealedly containing the inner pack, the inner blank being heat-sealable and having shieldability with respect to aroma and flavor components released from the cigarette bundle; and folding a paper outer blank around the inner box to form a hinged-lid outer box containing the inner box.

The fabricating method can be implemented simply by inserting a section for forming the inner box in between a section for forming the inner pack and a section for forming the outer box in a production line of cigarette packages. In addition, the inner-box forming section can be obtained by an arrangement similar to the outer-box forming section. As a result, the fabricating method of the present invention is capable of fabricating the cigarette package without difficulty.

The fabricating method may further include a step of applying an aromatic substance for emanating aroma to at least either an outer side of the inner blank or an inner side of the outer blank prior to the folding operation of the inner and outer blanks.

### Brief Description of the Drawings

FIG. 1 is a perspective view showing a cigarette package of a first embodiment, partially broken away;
FIG. 2 is a perspective view showing an inner pack contained in an inner box of the cigarette package of FIG. 1;
FIG. 3 is a perspective view showing the inner box of FIG. 2 in a closed position;
FIG. 4 is a perspective view showing the inner box of FIG. 2 in an open position;
FIG. 5 is a sectional view showing a sheet material used as an inner blank for the inner box;
FIG. 6 is a perspective view showing the cigarette package of FIG. 1 in an open position;
FIG. 7 is a perspective view showing a cigarette package of a second embodiment;
FIG. 8 is a perspective view showing a cigarette package of a third embodiment;
FIG. 9 is a flowchart showing a method of fabricating the cigarette packages;
FIG. 10 is a schematic view showing a part of a production line of the cigarette packages;
FIG. 11 is a view showing a part of a procedure of folding the inner blank in the order from (a) to (d);
FIG. 12 is a view showing the rest of the procedure of folding the inner blank in the order from (e) to (g); and
FIG. 13 is a view showing a state in which the inner box is heat-sealed from above and beneath in the position shown in FIG. 12 (g).

### Best Mode of Carrying out the Invention

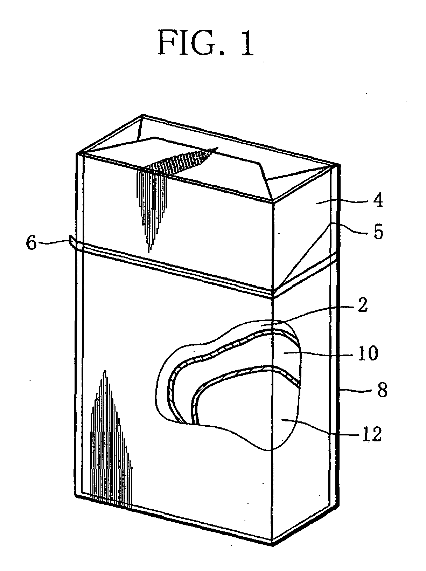

FIG. 1 shows a cigarette package of a first embodiment.

The cigarette package has a hinged-lid outer box 2. The outer box 2 is formed by folding a paper outer blank. An upper portion of the outer box 2 is formed into a lid 4. The lid 4 is connected to a rear face of the outer box 2 through a self hinge 5. The self hinge 5 arrows the lid 4 to make a rotating movement. When the lid 4 is turned around the self hinge 5 from the position shown in FIG. 1, the outer box 2 is opened. The outer box 2 is further wrapped in a transparent film 8, which has a tear tape 6.

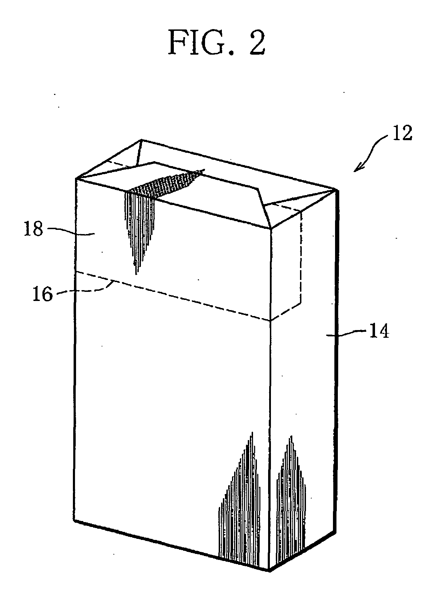

The outer box 2 contains an inner box 10 therein. The inner box 10 sealedly contains an inner pack 12 as shown in FIG. 2. The inner pack 12 includes a bundle of, for example, twenty filter cigarettes (not shown), and an inner wrapper, or soft aluminum-evaporated paper 14 for wrapping the cigarette bundle. The aluminum-evaporated paper 14 is first wrapped around the cigarette bundle in the shape of the letter U, and both ends of the aluminum-evaporated paper 14 are overlaid with each other on the bundle. Such wrapping of the aluminum-evaporated paper 14 forms two rectangular lugs in the aluminum-evaporated paper 14. These lugs protrude from respective end faces of the cigarette bundle. Thereafter, the lugs are folded toward the respective end faces of the cigarette bundle to cover the end faces, respectively.

The aluminum-evaporated paper 14 includes a thin base material such as paper and an evaporated aluminum film formed on an outer surface of the base material. The aluminum-evaporated paper 14 further has a section to be cut off 18 in one portion thereof. The section to be cut off 18 is demarcated by a perforation line, or cutoff line 16. When the section to be cut off 18 is separated along the cutoff line 16, a part of the cigarette bundle is exposed from the inner pack 12.

The inner pack 12 may include an aromatic substance such as menthol. The aromatic substance is added directly to shred tobacco of filter cigarettes or applied to an inner surface of the aluminum-evaporated paper 14.

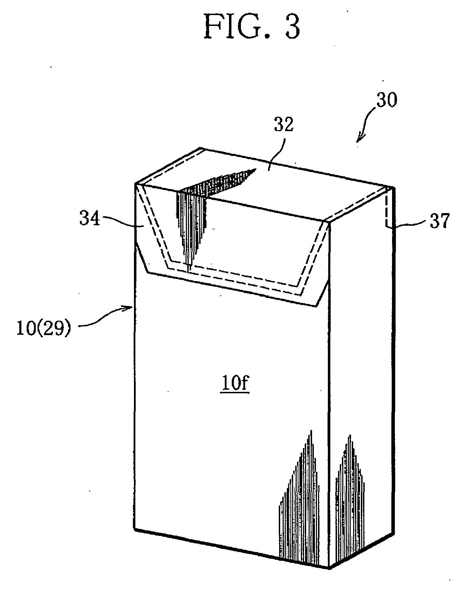

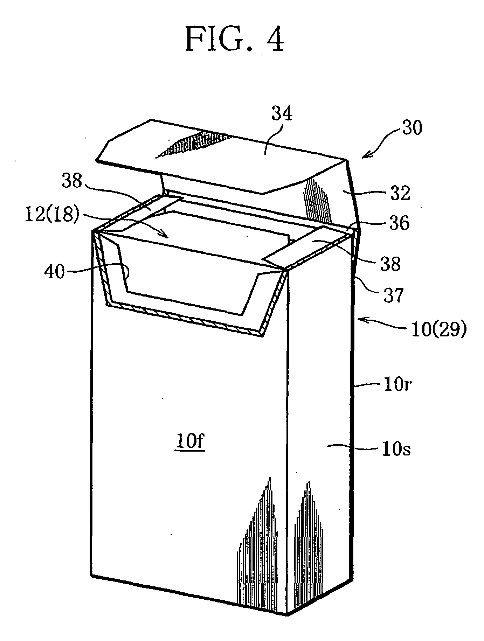

As illustrated in FIGS. 3 and 4, the inner box 10 is formed by folding an inner blank around the inner pack 12. The inner blank is made of a heat-sealable sheet material. Lap portions of the inner blank are overlapped with each other by the folding operation thereof, are heat-sealed. Accordingly, the inner box 10 airtightly contains the inner pack 12.

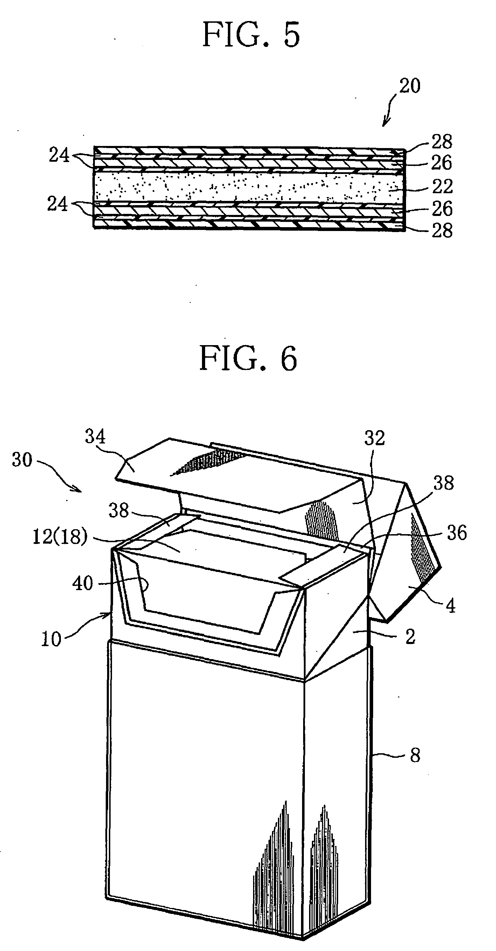

More specifically, a sheet material 20 for forming the inner blank has a sectional structure shown in FIG. 5. The sheet material 20 includes base paper 22 located in the center thereof. On each side of the base paper 22, an aluminum layer 26 as a metal layer and a PP (polypropylene) resin layer 28 are laminated in order through adhesive layers 24. The aluminum layers 26 serve as shielding layers with respect to aroma and flavor components contained in the inner pack 12, whereas the PP resin layers 28 as heat-seal layers.

As is obvious from FIGS. 3 and 4, the inner box 10 includes a box body 29 having an opening in an upper end thereof and a tongue lid 30 for opening/closing the inner box 10. The tongue lid 30 has a lid portion 32 for covering the opening of the box body 29, a tongue portion 34 extended from a front edge of the lid portion 32, for covering an upper portion of a front wall 10f in the box body 29, and a rear wall portion 36 extending from a rear edge of the lid portion 32. The rear wall portion 36 is connected to a rear wall 10r of the box body 29 through a self hinge 37. Therefore, the tongue lid 30 is arrowed to make a rotating movement around the self hinge 37. When the tongue lid 30 is rotated from the closed position shown in FIG. 3, the inner box 10 is opened as illustrated in FIG. 4.

In order to allow the tongue lid 30 to make the rotating movement, the tongue lid 30 is detachably heat-sealed to the box body 29 when the inner box 10 is fabricated by folding the inner blank. More specifically, the tongue portion 34 is detachably heat-sealed to the front wall 10f of the box body 29, and the lid portion 32 is detachably heat-sealed to right and left inner top flaps 38. The inner top flaps 38 are connected to respective side edges of the opening of the box body 29, to thereby partially close the opening. The rear wall portion 36 is detachably heat-sealed to right and left side walls of the box body 29. Broken lines in FIG. 3 and hatching in FIG. 4 indicate an area in which the tongue lid 30 is detachably heat-sealed to the box body 29.

To add more explanation, each of right and left side walls 10s of the box body 29 is formed by overlaying inner side flap and outer side flap of the inner blank with each other. These side flaps are undetachably heat-sealed. A bottom wall of the box body 29 is made by superposing a bottom panel of the inner blank upon right and left inner bottom flaps. The bottom panel and the inner bottom flaps are also undetachably heat-sealed.

As illustrated in FIG. 4, the front wall 10f of the box body 29 has a U-shaped aperture 40 in an upper portion thereof. When the inner box 10 is formed, the aperture 40 is airtightly blocked by the tongue portion 34 being heat-sealed to the front wall 10f.

The cigarette package is opened in the following order. First, an upper portion of the transparent film 8 is cut away along the tear tape 6, to thereby expose the lid 4 of the outer box 2 from the transparent film 8. Subsequently, the lid 4 is opened to expose the tongue lid 30 of the inner box 10 from the outer box 2. The tongue lid 30 is opened while the heat sealing between the tongue lid 30 and the box body 29 is released as shown in FIG. 6, to thereby expose an upper portion of the inner pack 12. The section to be cut off 18 of the inner pack 12 is then cut off, and the filter cigarettes packed in the inner pack 12 can be taken out from the inner box 10, namely the cigarette package.

Before the tongue lid 30 of the inner box 10 is opened for the first time, the inner pack 12 is sealed within the inner box 10. Therefore, after the cigarette package is produced, the aroma and flavor components of the filter cigarettes never escape outside the inner box 10 before the tongue lid 30 is first opened. As a consequence, the cigarette package is capable of preventing quality deterioration of the filter cigarettes and extending a best-before date of the filter cigarettes.

As the outer box 2 is produced by folding the outer blank, so the inner box 10 is formed by folding the inner blank. Accordingly, the cigarette package can be fabricated by inserting an inner-box forming section similar to an outer-box forming section for the outer box 2 as a pre-stage for the outer-box forming section in the production line of cigarette packages, and implementing the step of forming the inner box 10, in which the inner pack 12 is sealed, at the inner-box forming section.

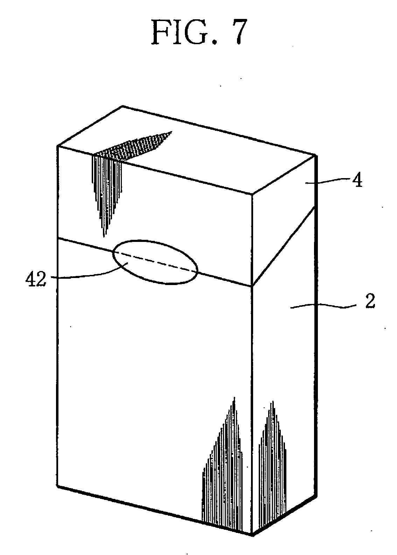

FIG. 7 shows a cigarette package according to a second embodiment.

The cigarette package of FIG. 7 includes a seal 42 instead of the transparent film 8. The seal 42 connects the front wall of the outer box 2 and the lid 4, and prevents the cigarette package from being tampered with as the transparent film 8 does.

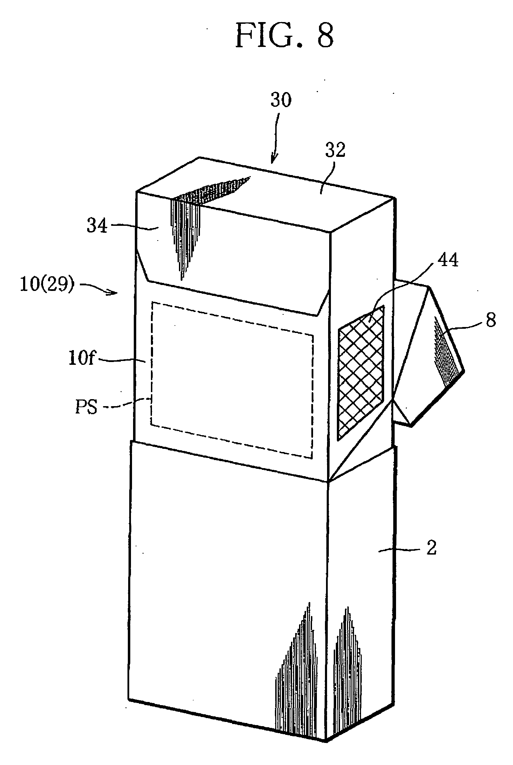

FIG. 8 shows a cigarette package according to a third embodiment.

In the case of the cigarette package shown in FIG. 8, a part or whole of the inner box 10 can be pulled out from the open end of the outer box 2, so that an outer surface of the inner box 10 can be widely exposed from the outer box 2. Therefore, for instance, as shown by a broken line, it is possible to secure a print area PS such as advertisement in the front wall 10f of the box body 29. The print area PS may be secured also in the side walls 10s and the rear wall 10r of the box body 29.

The cigarette package may further include therein an emanating source 44 of aroma similar to one added to the filter cigarettes. The emanating source 44 is produced by applying an aromatic substance such as menthol onto an inner surface of the outer box 2 or the outer surface of the inner box 10. After the cigarette package is produced, the aroma released from the aroma-emanating source 44 is maintained so as to be filled in the gap between the outer box 2 and the inner box 10. When the lid 4 of the outer box 2 is first opened, the aroma emanates from the gap between the outer box 2 and the inner box 10. Consequently, before opening the inner box 10, the smoker, or consumer, can enjoy the same aroma as the one added to the filter cigarettes in the inner pack 12.

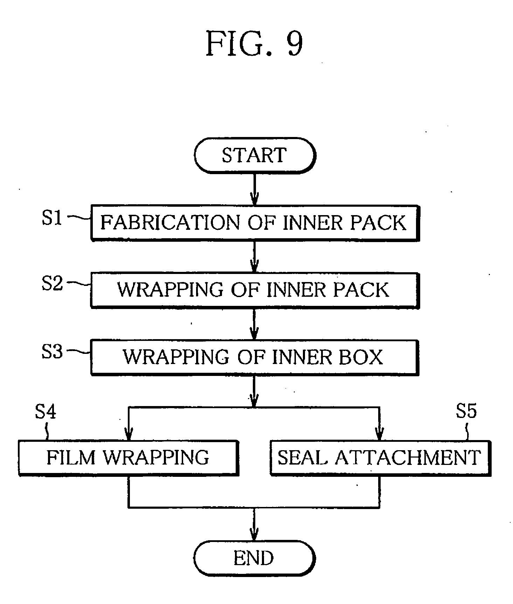

FIG. 9 is a flowchart showing a method of fabricating the cigarette package.

As is apparent from FIG. 9, the fabricating method wraps a cigarette bundle in the aluminum-evaporated paper 14 to form the inner pack 12 (Step S1), sealedly wraps the inner pack 12 by folding the inner blank (inner-pack wrapping) to form the inner box 10 (Step S2), and then wraps the inner box 10 by folding the outer blank (inner-box wrapping) to form the outer box 2 (Step S3).

Thereafter, the fabricating method further comprises the slep of wraping the outer box 2 in the transparent film 8 (Step S4) or attaching the seal 42 to the outer box 2 (Step S5), whereby the cigarette package shown in FIG. 1 or 7 is fabricated.

The fabrication of the cigarette package of FIG. 8 uses an inner blank previously printed with advertisement or the like. An outer blank for forming the outer box 2 is folded around the inner box 10 and is not bonded to the inner box 10. The fabrication of the cigarette package with the aroma-emanating source 44 uses an inner blank and/or an outer blank in which an aroma substance is applied to at least either an outer side of the inner blank or an inner side of the outer blank.

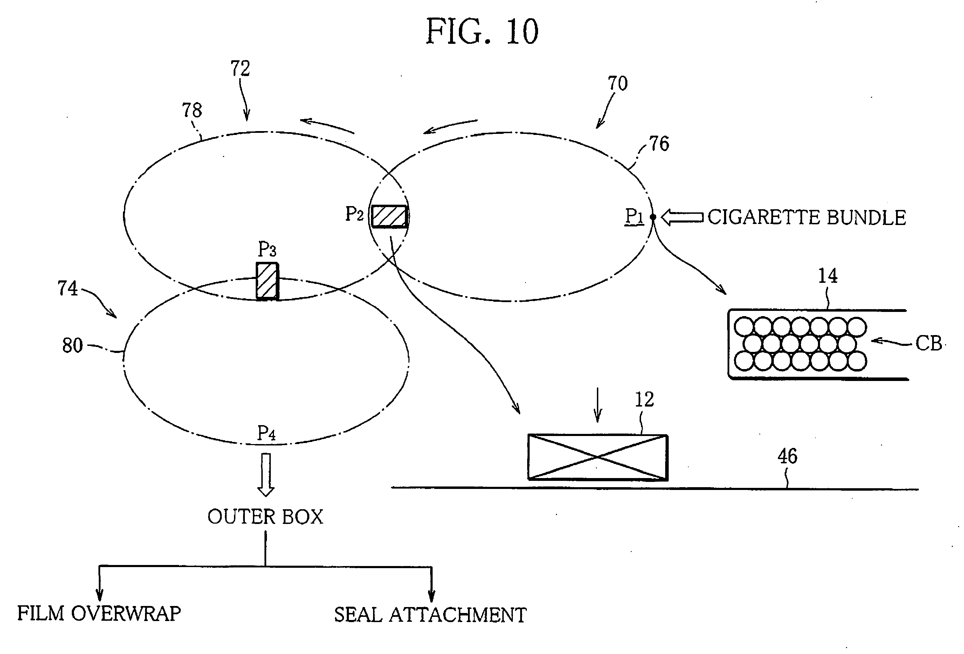

FIG. 10 schematically shows a part of the production line of the cigarette package.

The production line includes a packing section 70, an inner-box forming section 72, and an outer-box forming section 74. The sections 70, 72 and 74 are arranged in order from an upstream side of the production line. The sections 70, 72 and 74 have horizontal wrapping turrets 76, 78 and 80, respectively. The wrapping turrets are capable of rotating intermittently. As is apparent from FIG. 10, the wrapping turrets 76, 78 and 80 are located in order adjacently to each other. Circumferences of two adjacent wrapping turrets overlap each other. Each of the wrapping turrets has a plurality of pockets. The pockets are arranged at regular intervals in a circumferential direction of the corresponding wrapping turret.

When the wrapping turret 76 is intermittently rotated, and one of the pockets of the wrapping turret 76 is positioned at an inlet position P₁, the pocket receives the aluminum-evaporated paper 14 with a cigarette bundle CB. At this point, the aluminum-evaporated paper 14 is wrapped around the cigarette bundle CB in the shape of the letter U. Subsequently, the wrapping turret 76 is further intermittently rotated, so that the cigarette bundle CB, together with the aluminum-evaporated paper 14, is transferred toward an outlet position of the wrapping turret 76, that is, an inlet position P₂ of the wrapping turret 78. During this transferring process, the aluminum-evaporated paper 14 is folded, and the inner pack 12 is produced (Step S1).

At the inlet position P₂, the pockets of the wrapping turret 76 can coincide with the respective pockets of the wrapping turret 78. When one of the pockets coincides with the corresponding pocket, the pocket of the wrapping turret 78 receives the inner pack 12 from the corresponding pocket of the wrapping turret 76 and the inner blank 46. The wrapping turret 78 is further intermittently rotated, and the inner pack 12 and the inner blank 46 are transferred toward an outlet position of the wrapping turret 78, that is, an inlet position P₃ of the wrapping turret 80. During this transferring process, the inner blank 46 is folded around the inner pack 12. Overlapping portions formed by this particular folding operation are heat-sealed, to thereby form the inner box 10 (Step S2).

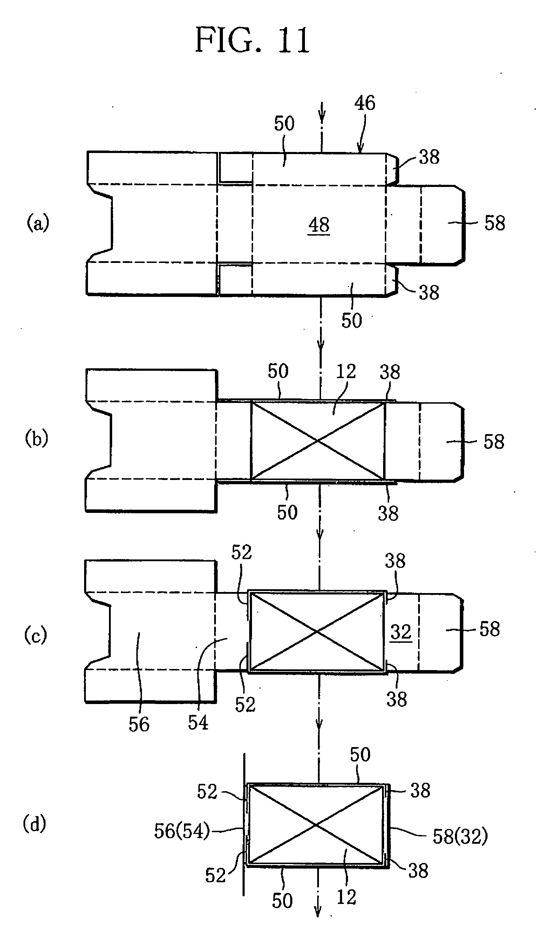

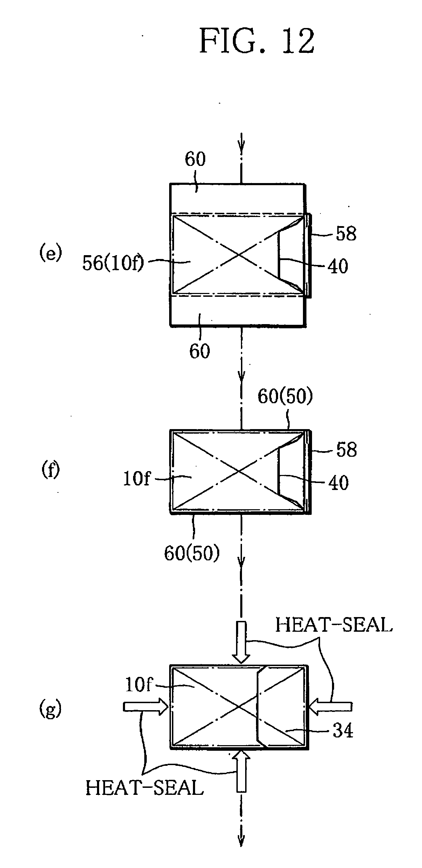

FIGS. 11 and 12 specifically show a routine of folding the inner blank 46.

The inner blank 46 as shown in FIG. 11 (a) is supplied to the inlet position P₂ of the wrapping turret 78. The inner pack 12 formed in the wrapping turret 76 is positioned above the inner blank 46 that has been supplied.

At the inlet position P₂, the inner pack 12 is pushed into the pocket of the wrapping turret 78 with the inner blank 46. At this point, as illustrated in FIG. 11 (b), the inner pack 12 is superposed upon a rear panel 48 (the rear wall 10r of the inner box 10) of the inner blank 46. At the same time, right and left inner side flaps 50 are folded against the respective side faces of the inner pack 12, so that the inner pack 12 is sandwiched between the inner side flaps 50. The inner side flaps 50 are connected to the respective sides of the rear panel 48 through fold lines.

In the next phase, the wrapping turret 78 is intermittently rotated, and the inner pack 12 is moved from the inlet position P₂ and placed in a folding position together with the inner blank 46. At the folding position, as illustrated in FIG. 11 (c), right and left inner bottom flaps 52 and right and left inner top flaps 38 of the inner blank 46 are folded against bottom and upper faces of the inner pack 12, respectively. The flaps 52 and 54 are connected to the respective ends of the inner side flaps 50 through fold lines.

At the next folding position, as illustrated in FIG. 11 (d), a bottom panel 54 of the inner blank 46 is folded against the bottom face of the inner pack 12 with a front panel 56. Simultaneously, a tongue lid panel 58 is folded against the upper face of the inner pack 12. The bottom panel 54 and the tongue lid panel 58 are connected to the rear panel 48 through fold lines.

At this point, the bottom panel 54 is superposed upon the inner bottom flaps 52, and the bottom panel 54 and the inner bottom flaps 52 form a bottom wall of the inner box 10. A lid portion 32 of the tongue lid panel 58 is superposed upon the inner top flaps 38, and the lid portion 32 and the inner top flaps 38 form an upper wall of the inner box 10.

At the next folding position, as illustrated in FIG. 12 (e), the front panel 56 of the inner blank 46 is folded against a front face of the inner pack 12, and the front panel 56 forms the front wall 10f of the inner box 10.

At the next folding position, as illustrated in FIG. 12 (f), outer side flaps 60 are folded toward the respective side faces of the inner pack 12 and superposed upon the respective inner side flaps 50. The side flaps 50 and 60 form side walls of the inner box 10. The outer side flaps 60 are connected to the respective sides of the front panel 56 through fold lines.

At the next folding position, as illustrated in FIG. 12 (g), the tongue portion 34 of the tongue lid panel 58 is folded against the front face of the inner pack 12 to be superposed upon the front face, and the folding operation of the inner blank 46 is finished.

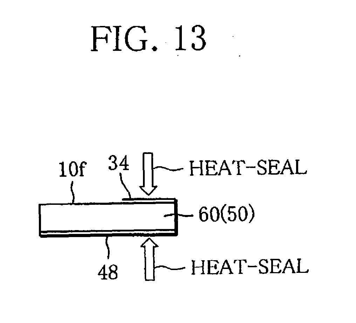

Thereafter, at this folding position, as shown by arrows, the inner box 10 is heat-sealed on all four sides. The panels and flaps forming the bottom and side walls of the inner box 10 are undetachably bonded to each other. At the same time, the lid portion 32 of the tongue lid 30 is detachably attached to the inner top flaps 38. As illustrated in FIG. 13, the inner box 10 is heat-sealed from above and beneath. The tongue portion 34 and the rear wall portion 36 of the tongue lid 30 are detachably attached to the front wall 10f and the side walls 10s of the inner box 10, respectively. At this point, the fabrication of the inner box 10 is completed.

As stated above, the heat sealing with respect to the inner box 10 is carried out all at once after the folding operation of the inner blank 46 is finished. Therefore, there is no fear that the heat-sealing step drastically reduces the production rate of the inner box 10.

As illustrated in FIG. 10, the completed inner box 10 is supplied to the outlet position of the wrapping turret 78, that is, the inlet position P₃ of the wrapping turret 80. At the inlet position P₃, the pocket of the wrapping turret 80 receives the inner box 10 from the wrapping turret 78 and the outer blank. The inner box 10 and the outer blank are transferred toward an outlet position P₄ by the intermittent rotation of the wrapping turret 80. During this transferring process, the outer blank is folded around the inner box 10, to thereby form the outer box 2. Subsequently, the outer box 2 is removed from the outlet position P₄ of the wrapping turret 80 and is supplied to a film-wrapping apparatus or seal-attaching apparatus.

The present invention is not limited to the above embodiments and may be modified in various ways.

For instance, the tongue lid 30 of the inner box 10 may be bonded to the box body 29 by using an adhesive that enables resealing, instead of the detachable heat sealing or in addition to such heat sealing. In this case, the tongue lid 30 has re-adhesiveness with respect to the box body 29. For this reason, even if the tongue lid 30 is once opened, the tongue lid 30 is capable of credibly closing the opening and aperture of the box body 29 again, which makes it possible to keep the inside of the inner box 10 in a substantially sealed state.

In the case where the cigarette package shown in FIG. 8 is fabricated, the outer side of the inner blank 46 and/or the inner side of the outer blank is previously applied with the aromatic substance that emanates aroma, prior to the folding operation of these blanks.

## Claims

1. A cigarette package comprising:
an inner pack (12) obtained by wrapping a cigarette bundle in an inner wrapper (14);
an inner box (10) sealedly containing said inner pack (12), and including a box body (29) with an open end and a tongue lid (30) for opening/closing the open end of the box body (29), wherein the box body (29) and the tongue lid (30) are formed of an inner blank (20), said inner blank (20) being heat-sealable and having a shielding layer therein with respect to aroma and flavor components released from the cigarette bundle; and
a hinged-lid outer box (2) formed of a paper outer blank and containing said inner box (10), wherein:
said inner blank (20) includes a base paper (22), a metal layer (26) serving as the shielding layer and a resin layer (28) serving as a heat-seal layer laminated in this order on each side of the base paper (22), and folding-lines,
the tongue lid (30) is connected to a rear wall (10r) of the box body (29) through a self hinge (37) and includes a lid portion (32) for opening and closing the open end of the box body (19) and a tongue portion (34) extending from the lid portion (32), the tongue portion (34) being superposed upon and detachably heat-sealed to a front wall (10f) of the box body (19) when the tongue lid (30) is in a closed position,
the box body (29) includes a pair of inner top flaps (38) provided at opposite side edges of the open end thereof in a state that the inner top flaps (38) are separated from the front wall (10f) of the box body (29), the inner top flaps (38) being detachably heat-sealed to the lid portion (32), and
the cigarette package further comprises an emanating source (44) arranged on at least either an outer side of said inner blank (20) or an inner side of said outer blank, for emanating aroma.

2. The cigarette package according to claim 1, wherein:
the metal layer (26) and the resin layer (28) are made of aluminum and polypropylene, respectively.

3. The cigarette package according to claim 1, wherein:
the tongue lid (30) has re-adhesiveness with respect to the box body (29).

4. The cigarette package according to claim 1, wherein:
said inner box (10) is allowed to be pulled out from the open end of the box body (29) and has a print area (PS) in an outer surface thereof.

5. The cigarette package according to claim 4, wherein:
the emanating source (44) is produced by applying an aromatic substance to the outer side of said inner box (10), the outer side of said inner box (10) being exposed from the outer box (2) when said inner box (10) is pulled out from the outer box.

6. A method of fabricating a cigarette package of one of the preceding claims 1 to 5, comprising the steps of:
wrapping the cigarette bundle in the inner wrapper (14) to form said inner pack (12);
folding around said inner pack (12) the inner blank (20) to form said inner box (10) including the box body (29) with the open end and the tongue (30) lid for opening/closing the open end of the box body (29) and directly and sealedly containing said inner pack (12), said inner blank (20) being heat-sealable and having shieldability with respect to aroma and flavor components released from the cigarette bundle;
folding the paper outer blank around said inner box (10) to form the hinged-lid outer box (2) containing said inner box (10), and
applying an aromatic substance (44) for emanating aroma to at least either the outer side of said inner blank (20) or the inner side of said outer blank, prior to the folding operation of said inner and outer blanks.

## Patentansprüche

1. Zigarettenpackung, umfassend:
- ein inneres Päckchen (12), das durch Einwickeln eines zigarettenbündels in eine innere Hülle (14) erhalten wird;
- eine innere Schachtel (10), die abdichtend das innere Päckchen (12) umfasst und einen Schachtelkörper (29) mit einem offenen Ende und einen Laschendeckel (30) zum Öffnen/Verschließen des offenen Endes des Schachtelkörpers (29) aufweist, wobei der Schachtelkörper (29) und der Laschendeckel (30) aus einem inneren Zuschnitt (20) geformt sind, wobei der innere Zuschnitt (20) heißsiegelfähig ist und eine Schutzschicht darin gegenüber Aroma- und Geschmackskomponenten aufweist, die von dem Zigarettenbündel abgegeben werden; und
- eine äußere Schachtel mit Klappdeckel (2), die aus einem äußeren Papierzuschnitt geformt ist und die innere Schachtel (10) umfasst, wobei:
der innere Zuschnitt (20) ein Grundpapier (22) aufweist, eine Metallschicht (26), die als die Schutzschicht dient, und eine Harzschicht (28), die als Heißsiegelschicht dient, die in dieser Reihenfolge schichtweise auf jede Seite des Grundpapiers (22) gelegt sind, und Falzlinien, der Laschendeckel (30) mit einer hinteren Wand (10r) des Schachtelkörpers (29) durch ein Eigengelenk (37) verbunden ist und einen Deckelabschnitt (32) zum Öffnen und Verschließen des offenen Endes des Schachtelkörpers (19) sowie einen Laschenabschnitt (34) aufweist, der vom Deckelabschnitt (32) aus verläuft, wobei der Laschenabschnitt (34) auf eine vordere Wand (10f) des Schachtelkörpers (19) gelegt und lösbar daran per Heißsiegeln befestigt ist, wenn sich der Laschendeckel (30) in einer geschlossenen Position befindet,
der Schachtelkörper (29) ein Paar innerer oberer Klappen (38) aufweist, die an gegenüberliegenden Seitenkanten des offenen Endes davon in einem Zustand vorgesehen sind, dass die inneren oberen Klappen (38) von der vorderen Wand (10f) des Schachtelkörpers (29) getrennt sind, wobei die inneren oberen Klappen (38) lösbar per Heißsiegeln an dem Deckelabschnitt (32) befestigt sind, und
die Zigarettenpackung ferner eine Ausströmquelle (44) umfasst, die an mindestens entweder einer Außenseite des inneren Zuschnitts (20) oder einer Innenseite des äußeren Zuschnitts zum Ausströmen von Aroma angeordnet ist.

2. Zigarettenpackung nach Anspruch 1, wobei:
die Metallschicht (26) und die Harzschicht (28) aus Aluminium beziehungsweise Polypropylen hergestellt sind.

3. Zigarettenpackung nach Anspruch 1, wobei:
der Laschendeckel (30) an dem Schachtelkörper (29) erneut haftfähig ist.

4. Zigarettenpackung nach Anspruch 1, wobei:
die innere Schachtel (10) aus dem offenen Ende des Schachtelkörpers (29) herausziehbar ist und einen Druckbereich (PS) in einer Außenfläche davon aufweist.

5. Zigarettenpackung nach Anspruch 4, wobei:
die Ausströmquelle (44) hergestellt wird, indem ein Aromastoff auf die Außenseite der inneren Schachtel (10) aufgebracht wird, wobei sich die Außenseite der inneren Schachtel (10) aus der äußeren Schachtel (2) heraus zeigt, wenn die innere Schachtel (10) aus der äußeren Schachtel gezogen wird.

6. Verfahren zur Herstellung einer Zigarettenpackung nach einem der vorhergehenden Ansprüche 1 bis 5, umfassend folgende Schritte:
- Einwickeln des zigarettenbündels in die innere Umhüllung (14), um das innere Päckchen (12) zu formen;
- Falten des inneren Zuschnitts (20) um das innere Päckchen (12), um die innere Schachtel (10) zu formen, die den Schachtelkörper (29) mit dem offenen Ende und den Laschendeckel (30) zum Öffnen/Verschließen des offenen Endes des Schachtelkörpers (29) aufweist und direkt und abdichtend das innere Päckchen (12) umfasst, wobei der innere Zuschnitt (20) heißsiegelfähig ist und eine Schutzwirkung gegenüber Aroma- und Geschmackskomponenten aufweist, die von dem Zigarettenbündel abgegeben werden;
- Falten des äußeren Papierzuschnitts um die innere Schachtel (10), um die äußere Schachtel mit Klappdeckel (2) zu formen, die die innere Schachtel (10) umfasst, und
- Aufbringen eines Aromastoffs (44) zum Ausströmen von Aroma auf mindestens entweder die Außenseite des inneren Zuschnitts (20) oder die Innenseite des äußeren Zuschnitts vor dem Vorgang des Faltens des inneren und äußeren Zuschnitts.

## Revendications

1. Emballage de cigarettes comprenant :
- un paquet intérieur (12) obtenu en enveloppant un lot de cigarettes dans une enveloppe intérieure (14) ;
- une boîte intérieure (10) contenant hermétiquement ledit paquet intérieur (12), et comprenant un corps de boîte (29) avec une extrémité ouverte et un couvercle à languette (30) pour ouvrir/fermer l'extrémité ouverte du corps de boîte (29), dans lequel le corps de boîte (29) et le couvercle à languette (30) sont formés d'une découpe intérieure (20), ladite découpe intérieure (20) étant thermoscellable et ayant une couche de protection par rapport aux arômes et aux agents de sapidité dégagés par le lot de cigarettes ; et
- une boîte extérieure à couvercle à articulation (2) formée d'une découpe extérieure en papier et contenant ladite boîte intérieure (10), dans lequel :
ladite découpe intérieure (20) comprend un papier de base (22), une couche métallique (26) servant de protection et une couche de résine (28) servant de couche de thermoscellage laminées dans cet ordre sur chaque face du papier de base (22), et des lignes de pliage,
le couvercle à languette (30) est raccordé à une paroi arrière (10r) du corps de boîte (29) via une articulation incorporée (37) et comprend une partie couvercle (32) pour ouvrir et fermer l'extrémité ouverte du corps de boîte (29) et une partie languette (34) s'étendant depuis la partie couvercle (32), la partie languette (34) étant superposée sur et thermoscellée de manière amovible à une paroi avant (10f) du corps de boîte (29) quand le couvercle à languette (30) est en position fermée,
le corps de boîte (19) comprend une paire de rabats supérieurs intérieurs (38) fournis sur des bords latéraux opposés de son extrémité ouverte dans un état tel que les rabats supérieurs intérieurs (38) sont séparés de la paroi avant (10f) du corps de boîte (19), les rabats supérieurs intérieurs (38) étant thermoscellés de manière amovible sur la partie couvercle (32), et
l'emballage de cigarettes comprend en outre une source d'émanation (44) disposée sur au moins soit une face extérieure de ladite découpe intérieure (20), soit une face intérieure de ladite découpe extérieure, pour dégager les arômes.

2. Emballage de cigarettes selon la revendication 1, dans lequel :
la couche de métal (26) et la couche de résine (28) sont constituées respectivement d'aluminium et de polypropylène.

3. Emballage de cigarettes selon la revendication 1, dans lequel :
le couvercle à languette (30) présente une ré-adhérence par rapport au corps de boîte (29).

4. Emballage de cigarettes selon la revendication 1, dans lequel :
ladite boîte intérieure (10) est autorisée à être retirée de l'extrémité du corps de boîte (29) et a une zone d'impression (PS) dans la surface extérieure de celle-ci.

5. Emballage de cigarettes selon la revendication 4, dans lequel :
la source d'émanation (44) est produite en appliquant une substance aromatique sur la face extérieure de ladite boîte intérieure (10), la face extérieure de ladite boîte intérieure (10) étant exposée hors de la boîte extérieure (2) quand ladite boîte intérieure (10) est retirée de la boîte extérieure.

6. Procédé de fabrication de l'emballage de cigarettes selon les revendications précédentes 1 à 5, comprenant les étapes de :
- emballage du lot de cigarettes dans l'emballage intérieur (14) pour former ledit paquet intérieur (12) ;
- pliage autour dudit paquet intérieur (12) de la découpe intérieure (20) pour former ladite boîte intérieure (10) comprenant le corps de boîte (29) avec l'extrémité ouverte et le couvercle à languette (30) pour ouvrir/fermer l'extrémité ouverte du corps de boîte (29), et contenant de manière directe et hermétique ledit paquet intérieur (12), ladite découpe intérieure (20) étant thermoscellable et offrant une protection par rapport aux arômes et aux agents de sapidité dégagés par le lot de cigarettes ;
- pliage de la découpe extérieure en papier autour de ladite boîte intérieure (10) pour former la boîte extérieure à couvercle à articulation (2) contenant ladite boîte intérieure (10), et
- application d'une substance aromatique (44) pour dégager les arômes sur au moins soit la face extérieure de ladite découpe intérieure (20), soit la face intérieure de ladite découpe extérieure, avant l'opération de pliage desdites découpes intérieure et extérieure.
